# FASCICULE DE BREVET EUROPEEN

(11) **EP 2 736 275 B1**
(45) Date de publication et mention de la délivrance du brevet: **27.05.2020**
(21) Numéro de dépôt: 13194050.4
(22) Date de dépôt: 22.11.2013
(51) Int. Cl.: H04W 12/06, H04W 12/08, H04W 4/60

(54) **MODULE ÉLECTRONIQUE POUR RENDRE UN MESSAGE ACCESSIBLE PAR UN SYTÈME D'EXPLOITATION VISÉ**
Elektronisches Modul, das den Zugang zu einer Nachricht über ein gezieltes Betriebssystem ermöglicht
Electronic module for making a message accessible to a target operating system

(30) Priorité: 27.11.2012 FR 1261302
(43) Date de publication de la demande: 28.05.2014
(73) Titulaire: IDEMIA France, 92400 Courbevoie (FR)
(72) Inventeur: Bousquet, Nicolas, 92700 Colombes (FR)
(74) Mandataire: Cabinet Beau de Loménie

(56) Documents cités:
- EP-A1- 2 173 060
- WO-A2-2008/077628
- US-A1- 2010 333 088
- US-B1- 7 478 173
- Chris Wolf: "Let's Get Virtual: A Look at Today's Server Virtualization Architectures", Data Center Strategies - In-Depth Research Overview, 14 mai 2007 (2007-05-14), XP055079211, Extrait de l'Internet: URL:http://etomicmail.com/files/dedicated_ server/Let's%20Get%20Virtual%20A%20Look%20 at%20Today's%20Virtual%20Server.pdf [extrait le 2013-09-13]

## Description

### Arrière-plan de l'invention

La présente invention se situe dans le domaine de l'envoi et la réception de messages, par un dispositif électronique, par exemple un terminal ou encore une carte à puce, comportant plusieurs environnements d'exécution, dont au moins un est un environnement d'exécution de confiance et un autre un environnement d'exécution polyvalent (« Rich OS » en anglais). On rappelle que les environnements d'exécution, de confiance ou polyvalents, comprennent ou sont inclus dans des ensembles électroniques de type chipset ou System on Chip.

L'environnement d'exécution de confiance est mis en œuvre à l'aide d'un processeur sécurisé, qui peut être un processeur dédié à cette tâche, ou avoir d'autres fonctions, et d'une mémoire non-volatile réinscriptible sécurisée, et est basé sur un système d'exploitation de confiance.

De manière similaire, l'environnement d'exécution polyvalent est basé sur un système d'exploitation polyvalent, permettant d'exécuter des applications d'origines diverses telle que l'Internet.

Aujourd'hui, lorsqu'un message est reçu par l'émetteur-récepteur d'un dispositif électronique, il est soit transmis à des éléments contrôlés par le système d'exploitation polyvalent s'exécutant sur ce dispositif comme par exemple un écran ou une mémoire, soit, lorsque le dispositif détecte que le message est reçu par une communication sécurisée, transmis à un élément sécurisé embarqué ou inséré dans le dispositif précité, tel que décrit dans le document US2008051122.

Cependant, dans le cas d'un dispositif électronique du type précité, c'est-à-dire comportant un environnement d'exécution de confiance, lorsque qu'un message est destiné au système d'exploitation de confiance ou à une de ses applications, il est possible qu'une application malveillante du système d'exploitation polyvalent fasse de la rétention ou détruise le message sans que celui-ci ne soit transmis au système d'exploitation de confiance. On parle alors de déni de service.

Il existe donc un besoin d'améliorer les procédés d'aiguillage de messages destinés à un système d'exploitation de confiance ou à une de ses applications.

### Objet et résumé de l'invention

La présente invention vise principalement à résoudre les inconvénients précités.

A cet effet, l'invention concerne un module électronique comprenant des moyens de détermination d'un système d'exploitation visé par un message reçu par un émetteur-récepteur d'un dispositif électronique, parmi au moins un système d'exploitation polyvalent et un système d'exploitation de confiance s'exécutant sur un même chipset de ce dispositif électronique, pour rendre le message accessible par le système d'exploitation visé. Les moyens de détermination étant mis en œuvre en réaction à la réception du message par l'émetteur-récepteur.

Ce module électronique peut être par exemple un ASIC (« Application Specific Integrated Circuit » en anglais) ou encore un microcontrôleur. Les moyens de détermination précités sont ainsi mis en œuvre directement, sans système d'exploitation interposé entre les moyens de détermination et l'électronique du module.

L'invention concerne également un procédé d'aiguillage mis en œuvre par le module électronique précité, le procédé comprenant une étape de détermination du système d'exploitation visé par un message reçu par un émetteur-récepteur d'un dispositif électronique, parmi au moins un système d'exploitation polyvalent et un système d'exploitation de confiance s'exécutant sur un même chipset de ce dispositif électronique, pour rendre le message accessible par le système d'exploitation visé ; l'étape de détermination se produisant en réaction à la réception du message par l'émetteur-récepteur.

Ainsi un des avantages majeurs de l'invention est d'éviter le déni de service d'un système d'exploitation par un autre, puisque, en réaction à la réception du message, les moyens de détermination sont mis en œuvre pour permettre l'accessibilité du message, le module électronique intercepte le message avant sa transmission à des éléments contrôlés par le système d'exploitation polyvalent ou par ses applications comme c'est le cas dans l'art antérieur, de sorte que le système d'exploitation visé est déterminé en amont, sans qu'une application malveillante ne puisse prendre possession du message lorsqu'il est destiné au système d'exploitation de confiance ou à une de ses applications.

Dans un mode particulier, le module électronique comprend des moyens de mise à disposition du message dans une mémoire accessible par le système d'exploitation visé.

Par exemple, lorsque le système d'exploitation visé est le système d'exploitation de confiance, cette mémoire est une mémoire de confiance, à laquelle le système d'exploitation polyvalent n'a pas accès.

Dans un mode particulier de réalisation de l'invention, le module électronique comporte en outre des moyens d'initialisation d'un canal de communication entre le module électronique et le système d'exploitation visé et des moyens d'envoi au système d'exploitation visé, par ce canal de communication, d'une notification de réception du message.

L'utilisation de canaux dédiés permet d'éviter qu'un des systèmes d'exploitation ou qu'une de ses applications n'intercepte le message destiné à l'autre système d'exploitation. Ces canaux peuvent être par exemple logiquement différents, ou encore physiquement distincts.

Dans un mode de réalisation particulier de l'invention, le message comprend une trame et les moyens de détermination comprennent des moyens de lecture d'un champ destinataire de cette trame ou du message pour identifier le système d'exploitation visé.

Les moyens de détermination peuvent alors comprendre en outre des moyens d'obtention de l'adresse de moyens de communication de l'environnement d'exécution du système d'exploitation visé, à partir d'une adresse de destination comprise dans le champ destinataire de cette trame ou du message, l'adresse de destination étant lue par les moyens de lecture.

L'obtention peut se faire par exemple par lecture de l'adresse des moyens de communication dans une table d'association mémorisée dans une mémoire accessible au système d'exploitation de confiance.

L'invention couvre également l'aiguillage des messages du type de ceux reçus par les protocoles de communication utilisés dans la téléphonie mobile ou tout autre protocole de communication sans fil.

Dans un autre mode de réalisation de l'invention, les moyens de détermination comprennent des moyens d'interprétation d'une commande contenue dans le message.

Ainsi, selon par exemple la nature de la commande, les moyens de détermination peuvent en déduire le système d'exploitation visé par le message.

L'invention concerne aussi un émetteur-récepteur comprenant un module électronique tel que précité.

De surcroit, l'invention concerne également un terminal comprenant un chipset sur lequel s'exécutent un système d'exploitation polyvalent et un système d'exploitation de confiance, ce terminal comportant un émetteur/récepteur ainsi qu'un module électronique tel que précité. Ce terminal peut être un terminal de téléphonie mobile.

En variante, ce terminal peut être un ordinateur portable ou une tablette tactile. Le terminal peut aussi être un système intelligent autonome ou embarqué, largement utilisé dans le cadre d'architectures de type machine-to-machine, comme par exemple l'ordinateur de bord d'un véhicule.

Dans un mode particulier, le module électronique est intégré dans le chipset du terminal.

Dans un mode particulier de réalisation de l'invention, le terminal comporte un canal de communication entre le système d'exploitation de confiance et l'émetteur-récepteur, afin que le système d'exploitation de confiance génère un message sécurisé directement transmis à cet émetteur-récepteur. Dans un mode particulier de réalisation de l'invention, les étapes du procédé précité sont déterminées par les instructions d'un programme d'ordinateur.

En conséquence, l'invention vise aussi un programme d'ordinateur comportant des instructions pour la mise en oeuvre des étapes du procédé tel que décrit ci-dessus, lorsque le programme est exécuté par un processeur.

Ce programme peut utiliser n'importe quel langage de programmation, par exemple sous la forme de code source ou de code objet. Le programme peut être compilé et/ou interprété ou dans n'importe quelle autre forme interprétable par un processeur.

L'invention vise aussi un support d'information lisible par un ordinateur et comportant les instructions d'un programme d'ordinateur tel que mentionné ci-dessus.

Ce support d'information peut être n'importe quelle entité ou dispositif, embarqué ou amovible, capable de stocker le programme. Par exemple, le support peut être un moyen de stockage tel qu'une mémoire ROM, un CDROM ou une ROM de circuit micro-électronique ou encore un moyen d'enregistrement magnétique par exemple un disque dur, ou une mémoire de type flash ou RAM.

D'autre part, le support d'information peut être un support transmissible tel qu'un signal électrique ou optique qui peut être acheminé via un câble électrique ou optique, par radio ou par d'autres moyens. Le programme selon l'invention peut être en particulier téléchargé dans un espace de stockage en ligne ou sur une plateforme Internet.

Alternativement, le support d'information peut être un circuit intégré dans lequel le programme d'ordinateur est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures:
- les figures 1A, 1B et 1C représentent schématiquement un dispositif électronique selon trois modes de réalisation de l'invention ;
- la figure 2 représente schématiquement le détail d'un module électronique selon un mode de réalisation de l'invention, dans son environnement ;
- la figure 3A représente sous forme d'organigramme, les principales étapes d'un procédé d'aiguillage pouvant être mis en œuvre par le module électronique de la figure 2, selon un premier mode de réalisation de l'invention ;
- la figure 3B représente sous forme d'organigramme, les principales étapes d'un procédé d'aiguillage selon un deuxième mode de réalisation de l'invention ;
- les figures 4, 5A et 5B représentent schématiquement des exemples de message selon l'invention, à savoir des trames SMS, selon le protocole TCP/IP et Bluetooth.

### Description détaillée de l'invention

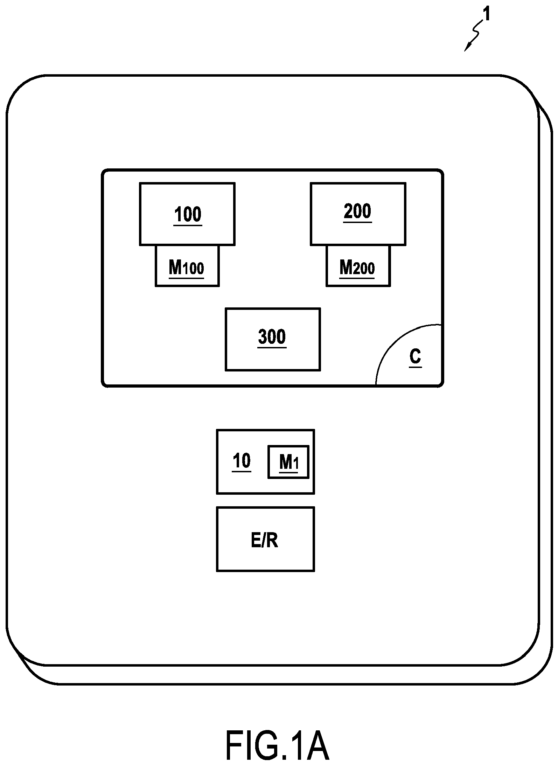

La **figure 1A** représente un dispositif électronique 1 selon un mode de réalisation de l'invention. Dans cet exemple, le dispositif électronique est un terminal, par exemple une tablette tactile, un ordinateur portable, ou un téléphone mobile.

En variante il aurait pu s'agir d'un dispositif de type machine-to-machine comme par exemple l'ordinateur de bord d'un véhicule, ou encore d'une carte à puce comme par exemple une carte bancaire ou un document d'identité électronique.

Dans l'exemple de la figure 1A, le terminal comprend un module électronique 10 et un émetteur-récepteur E/R. Ce terminal comprend également un chipset référencé C (ce chipset pourrait également être sur un System On Chip du terminal) sur lequel deux systèmes d'exploitation, à savoir un système d'exploitation polyvalent 100 et un système d'exploitation de confiance 200, chacun ayant une mémoire propre, respectivement M₁₀₀ et M₂₀₀, sont exécutés par le processeur 300.

En particulier, ces deux systèmes d'exploitation sont démarrés de manière conjointe, au démarrage du terminal 1. En effet, de façon connue de l'homme du métier, l'environnement d'exécution sécurisé du système d'exploitation de confiance 200 dispose d'un mécanisme de démarrage sécurisé (« Secure Boot » en anglais) qui consiste à authentifier le système d'exploitation de confiance 200, puis à l'initialiser, c'est-à-dire à le lancer, puis à démarrer le système d'exploitation polyvalent 100.

Plus précisément, le Secure Boot est une chaîne d'étapes amenant au démarrage complet du terminal, chaque étape validant la suivante. Ainsi l'étape i+1 n'est déclenchée que si l'étape i valide la transition.

Toutefois, le fonctionnement actif, par opposition à la veille, de chacun des systèmes d'exploitation est exclusif. C'est-à-dire que lorsqu'un des systèmes d'exploitation est actif, l'autre est en mode inactif.

De façon générale, le module électronique est un composant matériel comportant un microprocesseur. Dans ce mode de réalisation, il comporte une mémoire propre M₁ dont il peut gérer l'accès par l'un ou l'autre des systèmes d'exploitation.

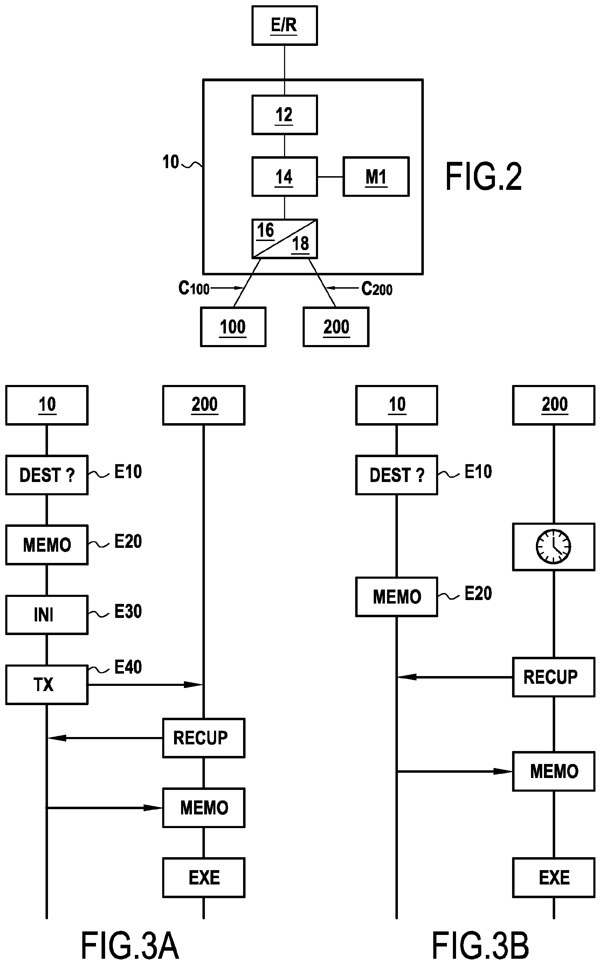

Ainsi, lorsque l'émetteur-récepteur E/R reçoit un message, il le transmet directement au module électronique 10. Après avoir déterminé le destinataire de ce message, le module électronique 10 peut l'envoyer directement au système d'exploitation visé ou bien en variante l'entreposer dans la mémoire M₁ afin que le système d'exploitation vienne le trouver ultérieurement, sur réception d'une notification ou bien de lui-même comme décrit en référence à la figure 3B.

Cette mémoire M₁ peut également constituer un support pour stocker le programme d'ordinateur comportant les instructions pour la mise en œuvre des étapes du procédé d'aiguillage tel que décrit ultérieurement en référence aux figures 3A et 3B.

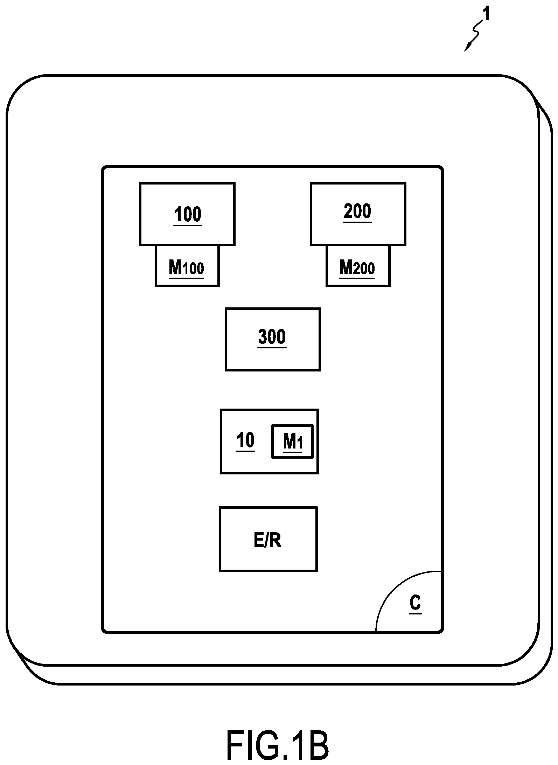

La **figure 1B** représente un terminal 1 conforme à un deuxième mode de réalisation de l'invention. Ce mode diffère de celui de la figure 1A en ceci que l'émetteur-récepteur E/R et le module électronique 10 sont également embarqués sur le chipset C.

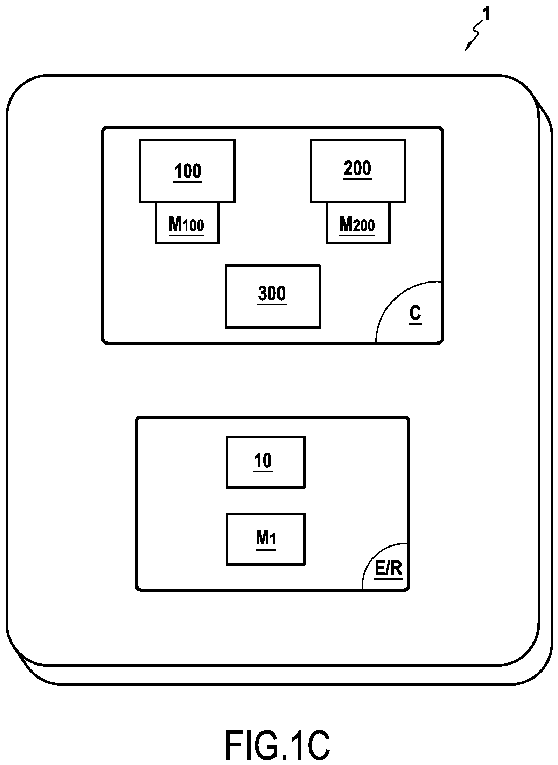

La **figure 1C** représente un terminal 1 conforme à un troisième mode de réalisation de l'invention. Ce mode diffère de celui de la figure 1A en ceci que le module électronique 10 est intégré à l'émetteur-récepteur E/R. Ainsi, le module électronique peut utiliser la mémoire M₁ de l'émetteur récepteur pour entreposer les messages qu'il aiguille, ou bien il peut néanmoins avoir sa propre mémoire dédiée (cas non représenté).

La **figure 2** représente le détail d'un module électronique 10 selon un mode de réalisation de l'invention, dans un environnement possible pouvant correspondre notamment à l'une des architectures représentées sur les figures 1A et 1B.

Le module électronique comporte des moyens de détermination 12 du destinataire d'un message reçu par l'émetteur-récepteur E/R.

Il comporte également des moyens 14 pour entreposer le message dans sa mémoire M₁ puis des moyens d'envoi 16 par un canal (noté C₁₀₀ lorsqu'il s'agit d'un canal avec le système d'exploitation polyvalent 100 et C₂₀₀ lorsqu'il s'agit d'un canal avec le système d'exploitation de confiance 200) d'une notification de réception d'un message. Ce canal ayant été préalablement initialisé par les moyens d'initialisation 18.

Plus précisément, l'initialisation d'un canal consiste à initialiser un contexte puis à démarrer une session de communication.

La **figure 3A** représente les principales étapes d'un procédé d'aiguillage selon un mode de réalisation particulier de l'invention, pouvant être mis en œuvre par un module électronique 10 tel que décrit précédemment en référence à la figure 2.

En réaction à la réception d'un message par l'émetteur-récepteur E/R, les moyens de détermination 12 du module électronique 10 déterminent au cours d'une étape E10, le système d'exploitation visé par ce message.

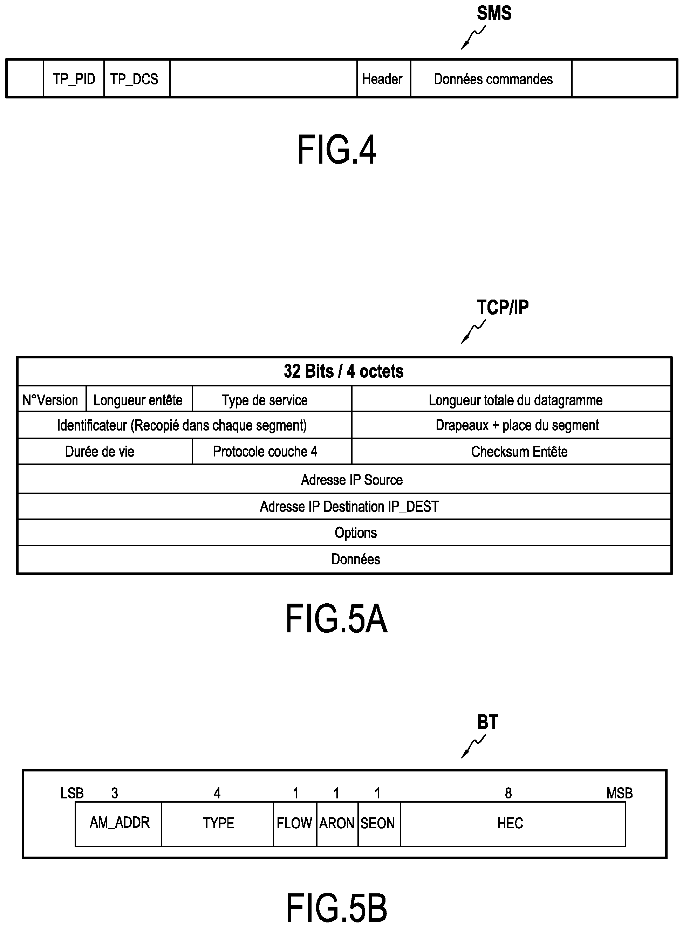

Dans un premier exemple, on suppose que le message est un SMS en mode PDU et comportant un champ TP_DCS, tel que représenté à la **figure 4****.**

La présente invention se propose de modifier la norme GSM 03.40 connue de l'homme du métier et selon laquelle le champ TP_DCS est codé sur 8 bits, afin de rajouter une classe correspondant au système d'exploitation de confiance.

De retour à notre premier exemple, les moyens de détermination 12 du module électronique 10 lisent ce champ TP_DCS et grâce à la classe contenue dans ce champ, déterminent le système d'exploitation visé par ce message.

Dans un deuxième exemple, on suppose que le message est une trame selon le protocole TCP/IP comportant un champ IP_DEST, tel que représenté à la **figure 5A****.**

De façon connue de l'homme du métier, ce champ comporte l'adresse IP de destination du message.

Dans le contexte de l'invention, l'environnement d'exécution du système d'exploitation polyvalent et l'environnement d'exécution du système d'exploitation de confiance comportent chacun des moyens de communication identifiés par leur adresse MAC (« Media Access Control » en anglais).

De retour à notre deuxième exemple, les moyens de détermination 12 du module électronique 10 lisent ce champ IP_DEST.

Afin d'identifier le système d'exploitation visé, les moyens de détermination doivent obtenir l'adresse MAC correspondant à l'adresse IP_DEST.

Pour cela, le module électronique 10 transmet une requête de type ARP («Adress Resolution Protocol» en anglais) aux moyens de communication de chacun des environnements d'exécution précités.

On précise que de manière connue de l'homme du métier, les moyens de communication ayant l'adresse IP correspondant à l'adresse IP_DEST répondent à la requête ARP en précisant leur adresse MAC.

De cette manière, le module électronique 10 peut construire une table d'association IP/MAC facilitant les communications ultérieures de messages.

En variante, le module électronique pourrait contenir une table d'association IP/MAC prédéfinie, de sorte que les moyens de détermination 12 n'auraient qu'à y lire l'adresse MAC correspondant à l'adresse IP pour identifier le système d'exploitation visé via les moyens de communication de son environnement d'exécution.

En pratique, une fois l'adresse MAC du système d'exploitation visé obtenue, la trame est ré-empaquetée en une trame Ethernet en vue d'être transmise ultérieurement aux moyens de communication caractérisés par cette adresse MAC.

De manière générale, le routage mis en œuvre dans cet exemple est effectué selon la couche 2 du modèle OSI.

Dans une variante possible de ce deuxième exemple, le message est non pas une trame selon le protocole TCP/IP mais une trame Bluetooth BT comportant un champ AM_ADDR, tel que représenté à la **figure 5B****.**

De façon connue de l'homme du métier, ce champ AM_ADDR comporte une adresse locale qui caractérise un nœud du réseau Bluetooth appelé Piconet. Cette adresse réseau locale est associée à une adresse BD_ADDR identifiant chaque terminal à l'initialisation du piconet.

Dans cette variante, le module électronique 10 cherche à obtenir l'adresse BD_ADDR caractéristique des moyens de communication de l'environnement d'exécution du système d'exploitation visé, de façon similaire à l'obtention de l'adresse MAC dans l'exemple précédent.

Dans un troisième exemple, les moyens de détermination 12 comprennent des moyens d'interprétation de commandes contenues dans le message. Ces moyens d'interprétation fonctionnent sur la base d'une liste de commandes ou de signatures de fonctions, permettant de reconnaître le système d'exploitation visé en fonction de la signature de la commande ou d'une empreinte contenue dans le message.

Contrairement aux deux exemples précédents dans lesquels la détermination du système d'exploitation visé reposait sur l'interprétation de métadonnées (champ destinataire) du message, la détermination repose ici sur l'interprétation des données elles-mêmes (signature, empreinte).

Ainsi, selon par exemple la nature sécurisée ou non de la commande, les moyens de détermination 12 peuvent en déduire que le système d'exploitation de confiance est visé par ce message.

De manière générale, l'invention couvre la détermination du système d'exploitation visé par un message via l'interprétation d'un élément ou «tag» en anglais, situé dans le corps ou l'en-tête de ce message.

L'invention couvre également l'aiguillage des messages du type de ceux reçus par les protocoles de communication utilisés dans la téléphonie mobile ou tout autre protocole de communication sans fil.

Si par exemple le message est destiné au système d'exploitation polyvalent 100, le module électronique 10 peut directement le lui transmettre, ou en variante l'entreposer dans une mémoire à laquelle le système d'exploitation polyvalent 100 a accès.

Par la suite, on se place dans le cas où le message est destiné au système d'exploitation de confiance 200.

De retour à la figure 3A, au cours d'une étape E20, les moyens de mémorisation 14 du module électronique 10 mémorisent le message dans la mémoire M₁. A ce stade, ni le système d'exploitation polyvalent 100 ni le système d'exploitation de confiance 200 ne sont informés de la réception d'un tel message par l'émetteur-récepteur.

Ensuite, dans le but d'informer le destinataire de la disponibilité d'un message qui lui est destiné dans la mémoire M₁, les moyens d'initialisation 18 initialisent un canal de communication C₂₀₀ avec le système d'exploitation de confiance 200 au cours d'une étape E30 et les moyens d'envoi 16 transmettent une notification de réception d'un message au système d'exploitation de confiance 200 au cours d'une étape E40.

Le système d'exploitation de confiance 200 ainsi réveillé, une de ses applications particulière récupère le message dans la mémoire M₁ afin de le placer dans sa mémoire propre M₂₀₀. Puis une application particulière du système lit le message et exécute les instructions qu'il contient.

En variante, le module électronique 10 peut configurer les droits d'accès à la mémoire M₁ de telle sorte que seul le système d'exploitation de confiance 200 peut y avoir accès.

Ainsi, une application particulière du système d'exploitation de confiance 200 lit le message depuis la mémoire M₁ puis exécute les instructions qu'il contient.

La **figure 3B** représente les principales étapes d'un procédé d'aiguillage selon un deuxième mode de réalisation particulier de l'invention.

Ce mode diffère de celui de la figure 3A en ceci qu'après avoir mémorisé le message dans la mémoire M₁, le module électronique 10 n'envoie pas de notification de réception au système d'exploitation de confiance 200, qui est également le système d'exploitation visé dans cet exemple.

Dans ce deuxième mode de réalisation, le système d'exploitation de confiance 200 consulte régulièrement la mémoire M₁.

En pratique, le rythme de consultation peut être déterminé soit par une horloge marquant le basculement (en mode actif) du système d'exploitation polyvalent 100 au système d'exploitation de confiance 200, soit par la réception d'une commande spécifique (« polling » en anglais). Ce dernier cas n'est pas représenté.

En variante la consultation de cette mémoire par le système d'exploitation de confiance 200 peut être provoquée suite à une certaine action de l'utilisateur du terminal ou d'une application du système d'exploitation polyvalent.

Lorsque la mémoire M₁ contient un message destiné au système d'exploitation de confiance 200, celui-ci le transfère dans sa mémoire propre M₂₀₀ puis une application particulière le traite.

En variante, une application particulière du système d'exploitation de confiance 200 pourrait traiter directement le message à partir de la mémoire M₁.

L'invention concerne également l'envoi sécurisé d'un message provenant du système d'exploitation de confiance 200, via un canal entre ce système et l'émetteur-récepteur E/R.

Ce canal peut être physique ou bien logique. Il permet de s'assurer que le message ne sera pas gardé ou détourné par le système d'exploitation polyvalent 100.

Le système d'exploitation polyvalent 100 ainsi que les applications qui sont exécutées dans son cadre n'ont pas la possibilité de commander le module électronique 10.

Dans certains modes de réalisation, les systèmes d'exploitation, notamment le système d'exploitation polyvalent 100, n'ont pas la possibilité d'envoyer de message ou de commande au module électronique 10.

## Revendications

1. Module électronique (10) comprenant des moyens de détermination (12) d'un système d'exploitation visé par un message reçu par un émetteur-récepteur (E/R) d'un dispositif électronique (1), parmi au moins un système d'exploitation polyvalent (100) et un système d'exploitation de confiance (200) s'exécutant sur un même chipset dudit dispositif électronique (1), pour rendre ledit message accessible par ledit système d'exploitation visé, lesdits moyens de détermination (12) étant mis en œuvre en réaction à la réception dudit message par ledit émetteur-récepteur (E/R),
**caractérisé en ce que** le module électronique est un composant matériel comportant un microprocesseur, les moyens de détermination étant mis en œuvre sans système d'exploitation interposé entre les moyens de détermination et l'électronique du module.

2. Module électronique (10) selon la revendication 1, **caractérisé en ce qu'**il comporte :
des moyens d'initialisation (18) d'un canal de communication entre ledit module électronique (10) et ledit système d'exploitation visé ; et
des moyens d'envoi (16) audit système d'exploitation visé, par ledit canal de communication, d'une notification de réception dudit message.

3. Module électronique selon l'une des revendications 1 à 2, lesdits systèmes d'exploitation de confiance et polyvalents n'ayant pas la possibilité d'envoyer de commande ou de message audit module électronique.

4. Module électronique (10) selon l'une quelconque des revendications 1 à 3, **caractérisé en ce que** ledit message comprend une trame (SMS ; TCP/IP ; BT), et **en ce que** lesdits moyens de détermination (12) comprennent des moyens de lecture d'un champ destinataire (TP_DCS ; IP_DEST ; AM_ADDR) de ladite trame ou dudit message pour identifier ledit système d'exploitation visé.

5. Module électronique (10) selon la revendication 4, **caractérisé en ce que** lesdits moyens de détermination (12) comprennent en outre des moyens d'obtention de l'adresse (MAC ; BD_ADDR) de moyens de communication de l'environnement d'exécution dudit système d'exploitation visé, à partir d'une adresse de destination comprise dans ledit champ destinataire (IP_DEST ; AM_ADDR) de ladite trame (TCP/IP ; BT) ou dudit message, ladite adresse de destination étant lue par lesdits moyens de lecture.

6. Module électronique (10) selon l'une quelconque des revendications 1 à 3, **caractérisé en ce que** lesdits moyens de détermination (12) comprennent des moyens d'interprétation d'une commande contenue dans ledit message.

7. Module électronique (10) selon l'une quelconque des revendications 1 à 6, **caractérisé en ce qu'**il comprend des moyens de mise à disposition dudit message dans une mémoire (M₁) accessible audit système d'exploitation visé.

8. Emetteur-Récepteur (E/R) comprenant un module électronique (10) selon l'une quelconque des revendications 1 à 7.

9. Terminal (1) comprenant un chipset (C) sur lequel s'exécutent un système d'exploitation polyvalent (100) et un système d'exploitation de confiance (200), ainsi qu'un émetteur/récepteur (E/R), ledit terminal étant **caractérisé en ce qu'**il comporte un module électronique (10) selon l'une quelconque des revendications 1 à 7.

10. Terminal (1) selon la revendication 9, **caractérisé en ce qu'**il comporte un canal de communication entre ledit système d'exploitation de confiance (200) et ledit émetteur-récepteur (E/R), afin que ledit système d'exploitation de confiance génère un message sécurisé directement transmis audit émetteur-récepteur.

11. Terminal (1) selon l'une quelconque des revendications 9 ou 10, **caractérisé en ce qu'**il est un terminal de téléphonie mobile.

12. Procédé d'aiguillage de message, mis en œuvre par un module électronique (10), ledit procédé étant **caractérisé en ce qu'**il comprend une étape de détermination (E10) du système d'exploitation visé par un message reçu par un émetteur-récepteur (E/R) d'un dispositif électronique (1), parmi au moins un système d'exploitation polyvalent (100) et un système d'exploitation de confiance (200) s'exécutant sur un même chipset dudit dispositif électronique (1), pour rendre ledit message accessible par ledit système d'exploitation visé, ladite étape de détermination (E10) se produisant en réaction à la réception dudit message par ledit émetteur-récepteur (E/R),
**caractérisé en ce que** le module électronique est un composant matériel comportant un microprocesseur, les moyens de détermination étant mis en œuvre sans système d'exploitation interposé entre les moyens de détermination et l'électronique du module.

13. Programme d'ordinateur comportant des instructions pour l'exécution du procédé selon la revendication 12 lorsque ledit programme est exécuté par un processeur.

14. Support d'enregistrement (M₁) lisible par un ordinateur sur lequel est enregistré un programme d'ordinateur comprenant des instructions pour l'exécution du procédé selon la revendication 12.

## Patentansprüche

1. Elektronisches Modul (10), umfassend Mittel zum Bestimmen (12) eines angezielten Betriebssystems durch eine Nachricht, die von einem Transceiver (E/R) einer elektronischen Vorrichtung (1) empfangen wird, unter mindestens einem Allzweck-Betriebssystem (100) und einem Vertrauensbetriebssystem (200), auf dem derselbe Chipsatz des elektronischen Geräts (1) ausgeführt wird, um die Nachricht für das angezielte Betriebssystem zugänglich zu machen, wobei die Mittel zum Bestimmen (12) als Reaktion auf den Empfang der Nachricht durch den Transceiver (E/R) umgesetzt werden,
**dadurch gekennzeichnet, dass** das elektronische Modul eine Hardwarekomponente ist, die einen Mikroprozessor aufweist, wobei die Mittel zum Bestimmen ohne Betriebssystem eingesetzt werden, das zwischen den Mitteln zum Bestimmen und der Elektronik des Moduls angeordnet ist.

2. Elektronisches Modul (10) nach Anspruch 1, **dadurch gekennzeichnet, dass** es aufweist:
Initialisierungsmittel (18) eines Kommunikationskanals zwischen dem elektronischen Modul (10) und dem angezielten Betriebssystem und
Mittel zum Senden (16) einer Benachrichtigung des Empfangs der Nachricht an das angezielte Betriebssystem durch den Kommunikationskanal.

3. Elektronisches Modul nach einem der Ansprüche 1 bis 2, wobei die Vertrauensbetriebssysteme und Allzweck-Betriebssysteme nicht die Möglichkeit haben, einen Befehl oder eine Nachricht an das elektronische Modul zu senden.

4. Elektronisches Modul (10) nach einem der Ansprüche 1 bis 3, **dadurch gekennzeichnet, dass** die Nachricht einen Frame (SMS; TCP/IP; BT) aufweist und dadurch, dass die Mittel zum Bestimmen (12) Mittel zum Lesen eines Empfängerfeldes (TP_DCS; IP_DEST; AM_ADDR) des Frames oder der Nachricht aufweisen, um das angezielte Betriebssystem zu identifizieren.

5. Elektronisches Modul (10) nach Anspruch 4, **dadurch gekennzeichnet, dass** die Mittel zum Bestimmen (12) ferner Mittel zum Erhalten der Adresse (MAC; BD_ADDR) von Kommunikationsmitteln der Ausführungsumgebung des angezielten Betriebssystems ausgehend von einer Empfängeradresse, die in dem Empfängerfeld (IP_DEST; AM_ADDR) des Frames (TCP/IP; BT) oder der Nachricht enthalten ist, aufweisen, wobei die Empfängeradresse durch die Mittel zum Lesen gelesen wird.

6. Elektronisches Modul (10) nach einem der Ansprüche 1 bis 3, **dadurch gekennzeichnet, dass** die Mittel zum Bestimmen (12) Mittel zum Interpretieren eines Befehls aufweisen, der in der Nachricht enthalten ist.

7. Elektronisches Modul (10) nach einem der Ansprüche 1 bis 6, **dadurch gekennzeichnet, dass** es Mittel zum Bereitstellen der Nachricht in einem Speicher (M₁) aufweist, der dem angezielten Betriebssystem zugänglich ist.

8. Transceiver (E/R), umfassend ein elektronisches Modul (10) nach einem der Ansprüche 1 bis 7.

9. Endgerät (1), umfassend einen Chipsatz (C), auf dem ein Allzweck-Betriebssystem (100) und ein Vertrauensbetriebssystem (200) ausgeführt werden, und einen Transceiver (E/R), wobei das Endgerät **dadurch gekennzeichnet ist, dass** es ein elektronisches Modul (10) nach einem der Ansprüche 1 bis 7 aufweist.

10. Endgerät (1) nach Anspruch 9, **dadurch gekennzeichnet, dass** es einen Kommunikationskanal zwischen dem Vertrauensbetriebssystem (200) und dem Transceiver (E/R) aufweist, damit das Vertrauensbetriebssystem eine gesicherte Nachricht generiert, die direkt an den Transceiver übertragen wird.

11. Endgerät (1) nach einem der Ansprüche 9 oder 10, **dadurch gekennzeichnet, dass** es ein Mobilfunkendgerät ist.

12. Verfahren zum Weiterleiten von Nachrichten, das von einem elektronischen Modul (10) umgesetzt wird, wobei das Verfahren **dadurch gekennzeichnet ist, dass** es einen Schritt des Bestimmens (E10) des angezielten Betriebssystems durch eine Nachricht, die von einem Transceiver (E/R) einer elektronischen Vorrichtung (1) empfangen wird, unter mindestens einem Allzweck-Betriebssystem (100) und einem Vertrauensbetriebssystem (200) aufweist, auf dem derselbe Chipsatz des elektronischen Geräts (1) ausgeführt wird, um die Nachricht für das angezielte Betriebssystem zugänglich zu machen, wobei der Schritt des Bestimmens (E10) als Reaktion auf den Empfang der Nachricht durch den Transceiver (E/R) umgesetzt wird, **dadurch gekennzeichnet, dass** das elektronische Modul eine Hardwarekomponente ist, die einen Mikroprozessor aufweist, wobei die Mittel zum Bestimmen ohne Betriebssystem eingesetzt werden, das zwischen den Mitteln zum Bestimmen und der Modulelektronik angeordnet ist.

13. Computerprogramm, das Anweisungen für das Ausführen des Verfahrens nach Anspruch 12 aufweist, wenn das Programm von einem Prozessor ausgeführt wird.

14. Computerlesbares Aufzeichnungsmedium (M₁), auf dem ein Computerprogramm aufgezeichnet ist, das Anweisungen für das Ausführen des Verfahrens nach Anspruch 12 aufweist.

## Claims

1. An electronic module (10) comprising means (12) for determining an operating system targeted by a message received by a transmitter-receiver (T/R) of an electronic device (1), from among at least a Rich-OS operating system (100) and a trusted operating system (200) executed on one same chipset of said electronic device (1), so that the said message becomes accessible to the said targeted operating system, the said determination means (12) being set in operation in response to receipt of the said message by the said transmitter-receiver (T/R),
**characterized in that** the electronic module is a material component comprising a microprocessor, the determination means being set in operation without any operating system inter-positioned between the determination means and the electronics of the module.

2. The electronic module (10) according to claim 1, **characterized in that** it comprises:
initialisation means (18) to initialise a communication channel between said electronic module (10) and said targeted operating system; and
means (16) for sending to said targeted operating system, via said communication channel, notification of receipt of the said message.

3. The electronic module according to one of claims 1 to 2, the said trusted and Rich-OS operating systems being unable to send a command or message to the said electronic module.

4. The electronic module (10) according to any of claims 1 to 3, **characterized in that** the said message comprises a frame (SMS; TCP/IP; BT), and **in that** the said determination means (12) comprise means for reading for reading a recipient field (TP_DC; IP_DEST; AM_ADDR) of said frame or said message to identify the said targeted operating system.

5. The electronic module (10) according to claim 4, **characterized in that** the said determination means (12) further comprise means for obtaining the address (MAC; BD_ADDR) of communications means of the execution environment of the said targeted operating system, from a destination address included in the said recipient field (IP_DEST; AM_ADDR) of said frame (TCP/IP; BT) or of said message, the said destination address being read by the said reading means.

6. The electronic module (10) according to any of claims 1 to 3, **characterized in that** the said determination means (12) comprise means for interpreting a command contained in the said message.

7. The electronic module (10) according to any of claims 1 to 6, **characterised in that** it comprises means for making said message available in a memory (M₁) accessible to the said targeted operating system.

8. A transmitter-Receiver (T/R) comprising an electronic module (10) according to any of claims 1 to 7.

9. A terminal (1) comprising a chipset (C), on which a Rich-OS operating system (100) and a trusted operating system (200) are executed, and a transmitter/receiver (T/R), the said terminal being **characterized in that** it comprises an electronic module (10) according to any of claims 1 to 7.

10. The terminal (1) according to claim 9, **characterized in that** it comprises a communication channel between said trusted operating system (200) and said transmitter-receiver (T/R), so that the said trusted operating system generates a secure message transmitted directly to the said transmitter-receiver.

11. The terminal (1) according to any of claims 9 or 10, **characterized in that** it is a mobile telephony terminal.

12. A message routing method implemented by an electronic module (10), the said method being **characterized in that** it comprises a determination step (E10) to determine the operating system targeted by a message received by a transmitter-receiver (T/R) of an electronic device (1), from among at least a Rich-OS operating system (100) and a trusted operating system (200) executed on one same chipset of said electronic device (1), so that the said message becomes accessible to said targeted operating system, the said determination step (E10) taking place in response to receipt of the said message by the said transmitter-receiver (T/R), **characterised in that** the electronic module is a material component comprising a microprocessor, the determination means being set in operation without any operating system inter-positioned between the determination means and the electronics of the module.

13. A computer program comprising instructions for implementing the method according to claim 12 when the said program is executed by a processor.

14. A recording medium (M₁) readable by a computer on which a computer program is recorded comprising instructions for the implementation of the method according to claim 12.
